Europäisches Patentamt

European Patent Office

Office européen des brevets

(11) Publication number: **0 089 430**
**B1**

(12) **EUROPEAN PATENT SPECIFICATION**

(45) Date of publication of patent specification: **26.08.87**

(21) Application number: **82301518.5**

(22) Date of filing: **23.03.82**

(51) Int. Cl.⁴: **G 01 B 17/04,** G 01 N 29/00,
G 01 M 3/24

(54) Method and apparatus for detecting crack produced in workpiece in distortion removal processing.

(43) Date of publication of application:
**28.09.83 Bulletin 83/39**

(45) Publication of the grant of the patent:
**26.08.87 Bulletin 87/35**

(84) Designated Contracting States:
**DE FR GB**

(56) References cited:
**DE-B-2 149 753**
**US-A-4 176 543**
**US-A-4 188 830**
**US-A-4 207 771**

**TECHNISCHES MESSEN, vol. 47, no. 12, 1980,**
**J. KASSER et al. "Prüfung industrieller Bauteile**
**mit Hilfe der Schallemmissionsanalyse", pages**
**435-440**

(73) Proprietor: **TOYOTA JIDOSHA KABUSHIKI**
**KAISHA**
**1, Toyota-cho Toyota-shi**
**Aichi-ken 471 (JP)**

(72) Inventor: **Fujimori, Kazuo**
**48, Homigaoka-2-chome**
**Toyota-shi, Aichi-ken (JP)**
Inventor: **Banno, Akira**
**56, Eikakushinmachi-2-chome**
**Toyota-shi (JP)**

(74) Representative: **Ben-Nathan, Laurence Albert**
**et al**
**c/o MICHAEL BURNSIDE & PARTNERS**
**2 Serjeants' Inn Fleet Street**
**London EC4Y 1HL (GB)**

Courier Press, Leamington Spa, England.

## Description

The present invention relates generally to a method and apparatus for detecting occurrence of cracks in a workpiece such as a shaft when the workpiece is processed in a distortion removing machine. More particularly, the present invention concerns a method and apparatus which are capable of instantaneously detecting with an enhanced reliability the cracks possibly produced in the workpiece in processing for removing distortion thereof on the basis of detection of acoustic emission signals emitted by the workpiece which is undergoing the distortion removal processing.

Among workpieces such as shafts and the like for use as components of motor vehicles, some is subjected to a thermal processing such as a high frequency surface cementation handening, for example. As the result, the workpiece undergone the thermal processing is susceptible to distortion such as bending, which involves serious problems in particular when the workpiece is a rotating member such as shafts. In fact, distortion of the shaft inevitably gives rise to non-uniform rotation of the shaft and additionally makes it very difficult to mount the shaft with a required precision. For this reason, the workpieces undergone thermal distortion are usually subjected to the subsequent processing for removing the distortion.

In the distortion eliminating process, there may possibly occur cracks in the workpiece in dependence on magnitude of distortion, pressure load applied to the workpiece and variation in load. Under the circumstances, the workpiece undergone the distortion eliminating process is usually inspected as to the presence of the cracks by using a pulverzied magnetic material. However, the inspection which resorts to the use of pulverized magnetic material for detecting the defects takes a lot of time and is disadvantageous in that the result of detection tends to be indefinite in dependence on concentration of the magnetic powder as used. In this conjunction, there has been known a method of detecting the crack by making use of an acoustic emission signal produced by a workpiece to be examined in various tests such as, for example, tensioning test, bending test, fatigue test for determining yield points. However, automatic method of detecting cracks produced in materials to be worked or in workpieces in site on a production line is not yet practiced. This can be ascribable to the fact that noises produced by vibrations of various machine parts renders it very difficult to detect with a reliability the acoustic emission signal emitted due to occurrence of cracks in the workpiece being processed and that determination as to whether a measuring or detecting system for detecting the acoustic emission signal is normally operating or not can not be effected in a reliable and facilitated manner.

US—A—4,188,830 discloses an apparatus for examining structures using stimulated acoustic emission wherein a structure is vibrated by a vibrator held in contact with the structure and a separate acoustic signal detector is held in contact with the structure to detect acoustic emissions caused by structural defects therein.

Technisches Messen Vol. 47, No. 12 1980 (Pages 435—440) describes the testing of industrial components by means of acoustic emission analysis.

An object of the present invention is accordingly to provide an improved method and apparatus which are capable of detecting cracks possibly produced in a workpiece while it is being processed for removing distortion thereof on the basis of an acoustic emission signal produced by the workpiece and detected at a high S/N ratio.

The invention provides a distortion removing machine having a pressing rod, for removing distortions in a workpiece by subjecting said workpiece to pressure exerted by said pressing rod, characterized in that it includes crack detecting means for detecting cracks possibly produced in said workpiece during processing for removing said distortions, the crack detecting means comprising an acoustic emission signal sensor embedded in the pressing rod and a detecting circuit connected to the sensor for detecting said cracks on the basis of a detection signal produced by said sensor when said workpiece is subjected to said pressure.

The invention also provides a method of detecting cracks utilizing crack detecting means, said cracks being possibly produced in a workpiece during processing for removing distortion thereof including the steps of:

detecting a first acoustic emission signal produced in a first predetermined period due to cracks possibly produced in the workpiece in the course of processing for removing the distortion and detecting a second acoustic emission signal produced in a second predetermined period due to causes other than said cracks;

determining occurrence or non-occurrence of said cracks by comparing said first emission signal with a first predetermined value, said first emission signal being contained in an output signal produced by an acoustic emission signal detecting sensor embedded in a pressing rod of a distortion removing machine; and diagnosing whether or not the crack detecting means operates properly by comparing said second emission signal with a second predetermined value.

The aforesaid detection circuit may include means for comparing said detection signal with a first predetermined level to determine whether said apparatus is operating normally, and means for comparing said detection signal with a second predetermined level higher than said first predetermined level to determine whether the cracks are occurring in said workpiece.

According to the invention, detection of occurrence of the cracks can be effected with an enhanced reliability in a very inexpensive and simple hardware structure on a real time basis without involving troublesome and time-consuming procedures such as magnetization, distribution of magnetic powder and the like required in the hitherto magnetic particle testing method. Further, the invention allows the crack detecting process as well as the distortion removing process to be carried out in an automatized manner within a remarkably shortened time.

Further, since the crack detecting operation is effected only during the period in which the crack is expected to be produced in the distortion removing process, the occurrence of the cracks can be detected with a high accuracy and reliability. The sensor embedded in the pressing rod of the distortion removing machine can receive the acoustic emission signals in a stabilized manner. Further, because the operation of the crack detecting apparatus is necessarily tested or checked once in every distortion removing process, the result of the crack detection can assure a high fidelity. Moreover, there is no necessity of providing a specific circuit for performing the check mentioned above, resulting in simplification in the configuration of circuits as used.

The above and other objects, features and advantages of the invention will be more apparent from description of a preferred, but nonlimiting embodiment of the invention. The description makes reference to the accompanying drawings, in which:—

Fig. 1A shows in a schematic front view a mechanical portion of a distortion removing machine having a crack detecting means, according to an exemplary embodiment of the invention;

Fig. 1B illustrates typical patterns of acoustic emission signals detected by a sensor in a distortion removing process.

Fig. 2 shows in a circuit diagram an electric circuit portion of the crack detecting means of a machine according to an exemplary embodiment of the invention;

Fig. 3 shows waveforms of signals produced at various circuit points of the electric circuit shown in Fig. 2 for illustrating operations of the circuit; and

Fig. 4A and 4B illustrate schematically mounting structures of the sensor in fragmental sectional front views.

In the following, the invention will be described in more detail in conjunction with a preferred embodiment thereof shown in the accompanying drawings.

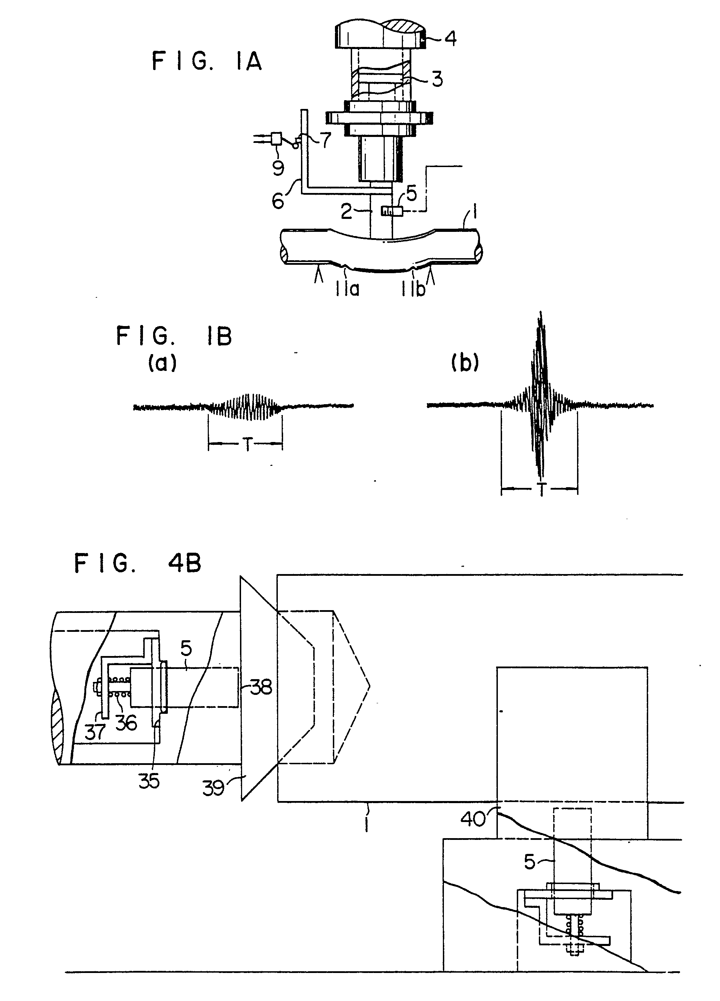

Referring to Fig. 1A, there is shown schematically a distortion removing machine provided with peripheral devices to which crack detecting means are applied. In this figure, a reference numeral 1 denotes a workpiece which is subjected to a pressure for removing distortion thereof, 2 denotes a pressing rod, 3 denotes a piston connected operatively to the pressing rod 2, and a numeral 4 designates a hydraulic cylinder for displacing the pressing rod 2 upwardly and downwardly by way of the piston 3. A sensor 5 for detecting acoustic emission signal is embedded in the pressing rod 2. Further, an L-like arm member 6 is fixedly mounted on the pressing rod 2 and has an upstanding leg portion provided with a projection 7 at a predetermined position so that the projection 7 is brought into contact with an actuator lever of a limit switch 9 when the pressing rod 2 is moved upwardly or downwardly. More specifically, the lever of the limit switch 9 and the projection 7 are disposed at such relative positions that the limit switch 9 is closed or turned on by the projection 7 when the pressing rod 2 which is initiated to move downwardly from an upper predetermined position comes to contact with the workpiece 1, while the limit switch 9 is opened or turned off by means of the projection 7 when the pressing rod 2 is moved upwardly to the position at which the pressing rod 2 was first brought into contact with the workpiece 1 in the course of the downward stroke thereof.

Fig. 1B graphically illustrates typical examples of acoustic emission signals which can be detected by the sensor 5 according to the invention in the processing of a workpiece to remove distortion thereof. Referring to Fig. 1A, a waveform illustrated at (a) corresponds to the acoustic emission signal detected when no cracks are produced. On the other hand, a waveform illustrated at (b) corresponds to the cracking acoustic emission signal radiated upon occurrence of cracks 11a and 11b (refer to Fig. 1) when the workpiece 1 is subjected to a pressure of the pressing rod 2.

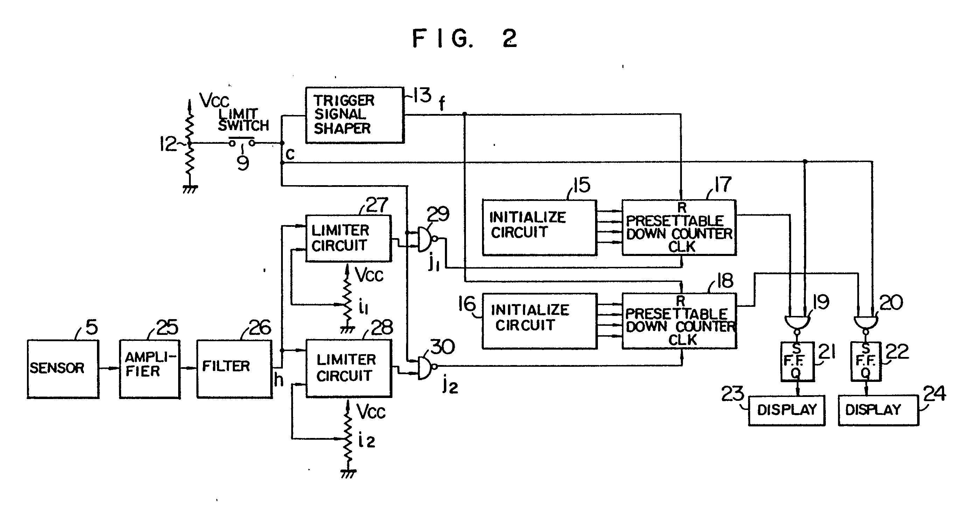

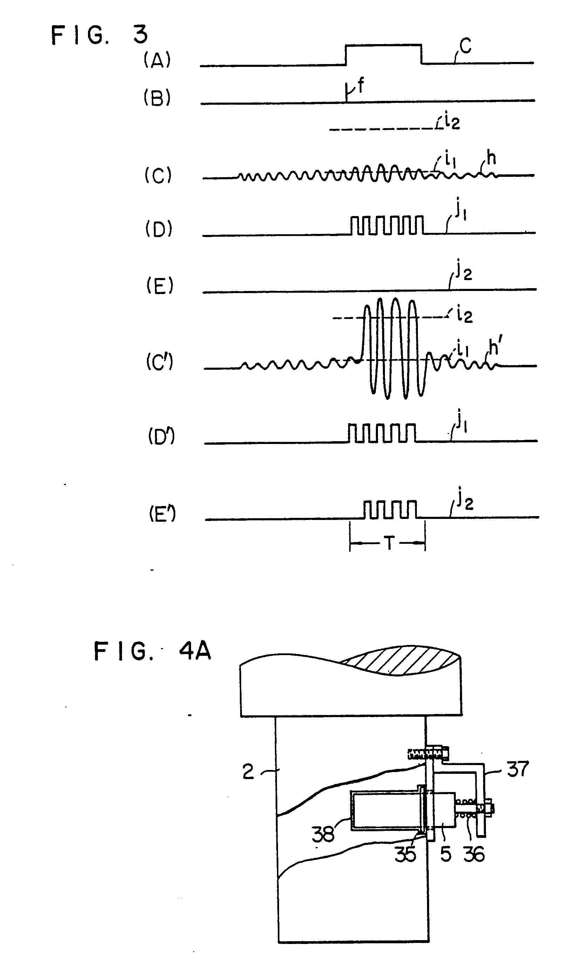

Fig. 2 shows in a circuit diagram an electric system, i.e. a crack detecting circuit according to an exemplary embodiment of the present invention, and Fig. 3 illustrates waveforms of signals produced at various circuit points of the crack detecting circuit shown in Fig. 2. Referring to Fig. 2, the reference numerals 5 and 9 designate, respectively, the sensor and the limit switch described above in conjunction with Fig. 1A. The limit switch 9 has one end connected to a voltage divider resistor 12 which serves to derive a predetermined voltage from a source voltage. Since the limit switch 9 is held in the closed or turned-on state during a period which begins at a time point when the lower end face of the pressing rod 2 is first brought into contact with the workpiece 1 in the course of the downward stroke thereof and ends at a time point where the lower end of the pressing rod 2 again comes to the position at which it was first contacted with the workpiece 1 in the course of the upward movement after completion of the distortion removal processing, there makes appearance at the other end of the limit switch 9 a signal $c$ of a waveform shown in Fig. 3 at (A). This period during which the signal $c$ takes the predetermined voltage level represented by logic "1" corresponds to a period of a length T during which the acoustic emission signal illustrated in Fig. 1B may be produced due to possible occurrence of cracks. This period the length T is also referred to as the period I. In this connection, it will be appreciated that although the period I of the duration T is set by means of the limit switch 9 in the case of the illustrated embodiment, any other suitable means such as a touch sensor switch or pressure switch may be employed to this end so far as the logic "1" level of the signal c can be discriminatively produced. Further, although description is made on the assumption that the period I during which the acoustic emission signal may be produced due to possible occurrence of cracks in the workpiece is set in coincidence with a period II during which acoustic emission signal ascribable to other causes than the cracking of the workpiece is produced, it is of course possible to set the periods I and II discriminatively from each other. For example, two limit switches are used for this purpose. Referring to Fig. 2, numerals 17 and 18 denote, respectively, presettable down-counters whose initial values are supplied from initial value setting circuits or initializing circuits 15 and 16, respectively. A trigger signal shaping circuit 13 is adapted to produce a trigger signal $f$ in response to a rise-up edge of the period defining signal $c$. Reference is to be made to Fig. 3 at (B). The down-counters 17 and 18 are reset by the trigger signal $f$. These down-counters 17 and 18 count pulses supplied as clock pulses from limiter circuits 27 and 28 through NAND circuits 29 and 30, respectively. When the initially set values have been counted down to zero, the down-counters 17 and 18 supply signals to set inputs of flip-flops 21 and 22 through NAND gazes 19 and 20, respectively. The outputs from the flip-flops 21 and 22 are supplied, respectively, to display means 23 and 24 for activation thereof.

Next, description will be made on the operation or function of the acoustic emission signal detector circuit shown in Fig. 2. When a single cycle of the distortion removal processing is executed in the manner described hereinbefore, the acoustic emission signal shown in Fig. 1B at (a) or (b) is detected by the sensor 5. For convenience of elucidation, the output waveform of the sensor 5 is illustrated in Fig. 3 at (c) in a simplified form. The detection signal $h$ which represents the output signal from the sensor 5 after having been conditioned to an appropriate level through an amplifier circuit 25 and a filter circuit 26 is shaped into pulse signals $j_1$ and $j_2$ with reference to predetermined standard or threshold levels $i_1$ and $i_2$, as illustrated at (c) in Fig. 3. These pulse signals $j_1$ and $j_2$ shown in Fig. 3 at (D) and (E) are supplied as the count or clock pulses to the down-counters 17 and 18 through the NAND circuits 29 and 30, respectively, which are enabled during the period in which the signal $c$ is at the logic "1" level. In other words, the pulse signals $j_1$ and $j_2$ are supplied to the down-counters 17 and 18, respectively, during the period of duration T in which cracking of the workpiece may possibly occur.

In the first place, description will be made of the operation on the assumption that no cracking takes place in the distortion removal processing. In this case, the detection signal $h$ is of such a waveform as shown in Fig. 3 at (c). The reference level signals $i_1$ and $i_2$ applied to the inputs of the limiter circuits 27 and 28, respectively, are so set that $i_1 \ll i_2$. So far as no cracking occurs, the detection signal $h$ has an amplitude which exceeds the reference or standard level $i_1$ but does not attain the other reference level $i_2$. As the consequence, the detection signal $h$ is shaped into the corresponding pulse signal through the only limiter circuit 27 that is applied with the reference or threshold level $i_1$ at the input thereof. The pulse signal $j_1$ thus produced from the limiter circuit 27 is transmitted to the down-counter 17 through the NAND circuit 29 which is enabled during the period T in which the signal $c$ is at the logic "1" level. The down-counter 17 has been reset in response to the rise-up edge of the signal $c$ and previously loaded with an initial value representative of non-occurrence of cracking. When the number of the pulses $j_1$ counted by the down-counter 17 exceeds the initial value, the flip-flop 21 is set through the NAND circuit 19 to activate the display means 23 and maintain it in the activated state. The initial value set at the down-counter 17 is selected sufficiently smaller than the number of pulses $j_1$ derived from the acoustic emission signal when no crack is produced.

Next, it is assumed that cracks are produced in the workpiece in the course of the processing for removing distortion. The detection signal designated by $h'$ then has an amplitude which is significantly higher than that of the detection signal $h$ produced when no crack occurs and exceeds the reference level $i_2$ (refer to Fig. 3 at C). Thus, the detection signal h' is shaped into pulse signals $j_1$ and $j_2$ through both the limiter circuits 27 and 28. Since the NAND circuits 29 and 30 are enabled during the period in which the signal $c$ remains logic "1", the pulse signal $j_1$ is supplied to the down-counter 17 with the pulse signal $j_2$ being supplied to the other down-counter 18. The down-counter 17 is previously loaded with the initial value representative of the non-occurrence of crack in response to the rise-up edge of the signal $c$, while the down-counter 18 is set at the initial value representative of the occurrence of crack in response to the rise-up edge of the signal $c$. Under the circumstances, both of the pulse signals $j_1$ and $j_2$ counted by both the down-counters 17 and 18 exceed the respective initial values, whereby the associated flip-flop 21 and 22 are set through the NAND circuits 19 and 20 to activate the display means 23 and 24 and maintain them in the activated state. In this connection, it is to be noted that the initial value set by the initializing circuit 16 is selected smaller than the number of pulses $j_2$ which can be derived from the acoustic emission signal produced when cracking occurs.

In this way, when the display means 24 is activated in addition to the display means 23, operator can determine that cracking occurs in the workpiece being processed. On the other hand, when only the display means 23 is activated with the other display means 24 remaining deenergized, it is determined that no crack is produced. Further, unless the display means 23 is activated at all, then it is expected that a fault occurs in the crack detecting means. By the way, one or both outputs from the flip-flops 21 and 22 may be additionally utilized for stopping operation of the processing machine and other purposes.

Next, an exemplary structure for mounting the sensor 5 will be described by referring to Figs. 4A which shows in a fragmental enlarged view a mounting structure of the sensor 5. For detecting the acoustic emission signal with a high stability and reliability, it is important that deposition of dusts or the like foreign particles on the sensitive surface of the sensor should be positively excluded. To this end, a hole is formed in the pressing rod 2 and the sensor 5 is inserted in the hole together with an O-ring seal 35 for preventing dusts or the like foreign particles from entering the hole and being deposited on the pressure sensitive face 38 of the sensor 5. Further, a spring 36 supported by means of a sensor holder 37 serves to support the sensor 5 under a constant pressure. It is thus assured that the acoustic emission signal is detected with a high stability for a long period.

In Fig. 4B, manners in which the sensor 5 is mounted on a work chuck 39 or on a fixture 40 are illustrated. Same components as those shown in Fig. 4A are denoted by the same reference numerals, and any further description is omitted.

## Claims

1. A distortion removing machine having a pressing rod (2), for removing distortions in a workpiece (1) by subjecting said workpiece to pressure exerted by said pressing rod, characterized in that it includes crack detecting means for detecting cracks (11a, 11b) possibly produced in said workpiece (1) during processing for removing said distortions, the crack detecting means comprising an acoustic emission signal sensor (5) embedded in the pressing rod (2) and a detecting circuit connected to the sensor for detecting said cracks (11a, 11b) on the basis of a detection signal produced by said sensor (5) when said workpiece (1) is subjected to said pressure.

2. A machine according to Claim 1, wherein said detecting circuit includes first comparing means (27) for comparing said detection signal with a first predetermined level ($i_1$) to determine whether said apparatus is operating normally, and second comparing means (28) for comparing said detection signal with a second predetermined level ($i_2$) higher than said first predetermined level to determine whether the cracks (11a, 11b) are occurring in said workpiece (1).

3. A machine according to Claim 2, wherein said detecting circuit comprises:

a limit switch (9) interlocked with said pressing rod (2) so as to be turned on and off;

an amplifier circuit (25, 26) for amplifying the detection signal produced by said sensor (5) when said workpiece (1) is subjected to pressure exerted by said pressing rod (2);

the first comparing means including a first limiter circuit (27) which has an input supplied with the amplified signal outputted from said amplifier circuit (25, 26) and has the first predetermined level ($i_1$);

the second comparing means including a second limiter circuit (28) which has an input supplied with the amplified signal outputted from said amplifier circuit (25, 26) and has the second predetermined leve ($i_2$);

a first counter circuit (15, 17) adapted to be reset by a turn-on signal of said limit switch (9) and count pulses supplied from said first limiter circuit (27);

a second counter circuit (16, 18) adapted to be reset by the turn-on signal of said limit switch (9) and count pulses supplied from said second limiter circuit (28);

a first flip-flop circuit (21) for holding a count signal supplied from said first counter circuit (17) during the period in which said limit switch (9) is turned on;

a second flip-flop circuit (22) for holding a count signal supplied from said second counter circuit (18) during the period in which said limit switch (9) is turned on;

a first display circuit (23) for displaying the signal held by said first flip-flop circuit (21); and

a second display circuit (24) for displaying the signal held by said second flip-flop circuit (22).

4. A machine according to Claim 1 wherein said sensor (5) embedded in said pressing rod (2) is inserted in a hole formed in said pressing rod together with an O-ring (35) for preventing dust from entering, and said sensor (5) is supported under a constant pressure by a spring (36) of a sensor holder (37).

5. A method of detecting cracks utilizing crack detecting means, said cracks being possibly produced in a workpiece during processing for removing distortion thereof including the steps of:

detecting a first acoustic emission signal produced in a first predetermined period (I) due to cracks (11a, 11b) possibly produced in the workpiece (1) in the course of processing for removing the distortion and detecting a second acoustic emission signal produced in a second predetermined period (II) due to causes other than said cracks (11a, 11b);

determining occurrence or non-occurrence of said cracks by comparing said first emission signal with a first predetermined value, said first emission signal being contained in an output signal produced by an acoustic emission signal detecting sensor (5) embedded in a pressing rod (2) of a distortion removing machine; and

diagnosing whether or not the crack detecting means operates properly by comparing said second emission signal with a second predetermined value.

## Patentansprüche

1. Verformungs-Beseitigungsgerät mit einer Druckstange (2) zur Beseitigung von Verformungen in einem Werkstück (1), indem das Werkstück dem von der Druckstange ausgeübten Druck ausgesetzt wird, gekennzeichnet durch eine Riß-Erfassungseinrichtung zur Erfassung von in dem Werkstück (1) während der Beseitigung der Verformungen möglicherweise erzeugten Rissen (11a, 11b), wobei die Riß-Erfassungseinrichtung einen in der Druckstange eingebetteten Schallemissions-Signalsensor (5) und eine mit dem Sensor verbundene Erfassungsschaltung aufweist, die die Risse (11a, 11b) auf der Basis eines von dem Sensor (5) während der Druckaussetzung des Werkstücks (1) erzeugten Erfassungssignals erfaßt.

2. Gerät nach Anspruch 1, dadurch gekennzeichnet, daß die Erfassungsschaltung eine erste Vergleichseinrichtung (27) zum Vergleich des Erfassungssignals mit einem ersten vorgegebenen Pegel (i1), um einen Normalbetrieb des Geräts festzustellen, sowie eine zweite Vergleichseinrichtung (28) zum Vergleich des Erfassungssignals mit einem zweiten vorgegebenen Pegel (i2), der höher als der erste vorgegebene Pegel ist, aufweist, um das Auftreten der Risse (11a, 11b) in dem Werkstück (1) festzustellen.

3. Gerät nach Anspruch 2, dadurch gekennzeichnet, daß die Erfassungsschaltung aufweist:

einen derart mit der Druckstange (2) verriegelten Grenzschalter (9), daß er ein- und ausgeschaltet wird;

eine Verstärkerschaltung (25, 26) zur Verstärkung des von dem Sensor (5) dann erzeugten Erfassungssignals, wenn das Werkstück (1) dem von der Druckstange (2) ausgeübten Druck ausgesetzt wird;

eine zu der ersten Vergleichseinrichtung gehörende erste Begrenzerschaltung (27), der als Eingangssignal das von der Verstärkerschaltung (25, 26) verstärkte Erfassungssignal zugeführt wird und die den ersten vorgegebenen Pegel (i1) aufweist;

eine zu der zweiten Vergleichseinrichtung gehörende zweite Begrenzerschaltung (28), der als Eingangssignal das von der Verstärkerschaltung (25, 26) verstärkte Erfassungssignal zugeführt wird und die den zweiten vorgegebenen Pegel (i2) aufweist;

eine durch ein Einschaltsignal des Grenzschalters (9) rücksetzbare erste Zählschaltung (15, 17) zum Zählen von von der ersten Begrenzerschaltung (27) zugeführten Impulsen;

eine durch das Einschaltsignal des Grenzschalters (9) rücksetzbare zweite Zählschaltung (16, 18) zum Zählen von von der zweiten Begrenzerschaltung (28) zugeführten Impulsen;

einen erste Flip-Flop-Schaltung (21) zum Speichern eines von der ersten Zählschaltung (17) während des Zeitraums, bei dem der Grenzschalter (9) eingeschaltet ist, zugeführten Zählsignals;

eine zweite Flip-Flop-Schaltung (22) zum Speichern eines von der zweiten Zählschaltung (18) während des Zeitraums, bei dem der Grenzschalter (9) eingeschaltet ist, zugeführten Zählsignals;

eine erste Anzeigeschaltung (23) zur Anzeige des von der ersten Flip-Flop-Schaltung (21) gespeicherten Signals; und

eine zweite Anzeigeschaltung (24) zur Anzeige des von der zweiten Flip-Flop-Schaltung (22) gespeicherten Signals.

4. Gerät nach Anspruch 1, dadurch gekennzeichnet, daß der in die Druckstange (2) eingebettete Sensor (5) zusammen mit einem zum Verhindern des Eindringens von Staub vorgesehenen O-Ring (35) in ein in der Druckstange ausgebildetes Loch eingesetzt ist und durch den von einer Feder (36) eines Sensorhalters (37) ausgeübten konstanten Druck gehalten wird.

5. Verfahren zum Erfassen von Rissen unter Verwendung einer Riß-Erfassungseinrichtung, die in einem Werkstück während der Entfernung einer in diesem ausgebildeten Verformung möglicherweise erzeugt werden, gekennzeichnet durch folgende Verfahrensschritte:

Erfassen eines ersten, in einem ersten vorgegebenen Zeitraum (I) aufgrund von im Laufe der Entfernung der Verformung in dem Werkstück (1) auftretenden Rissen (11a, 11b) erzeugten Schallemissions-Signals und Erfassen eines zweiten Schallemissions-Signals in einem zweiten vorgegebenen Zeitraum (II), das auf andere Ursachen als die Risse (11a, 11b) zurückzuführen ist;

Bestimmen des Auftretens oder des Nicht-Auftretens der Risse durch Vergleichen des ersten Schallemissions-Signals mit einem ersten vorgegebenen Wert, wobei das erste Schallemissions-Signal in dem von einem in einer Druckstange eines Verformungs-Entfernungsgerät eingebetteten Schallemissions-Signalerfassungssensor (5) erzeugten Ausgangssignal enthalten ist; und

Überprüfen, ob die Riß-Erfassungseinrichtung richtig arbeitet oder nicht, indem das zweite Schallemissions-Signal mit einem zweiten vorgegebenen Wert verglichen wird.

## Revendications

1. Une machine de redressement de déformation comportant une tige de pressage (2) pour le redressement des déformations d'une pièce mécanique (1), en soumettant ladite pièce mécanique à une pression exercée par ladite tige de pressage, caractérisée en ce qu'elle comporte des moyens de détection de fissures pour la détection des fissures (11a, 11b) éventuellement produites dans ladite pièce mécanique (1) au cours du traitement de redressement desdites déformations, les moyens de détection de fissures comportant un capteur de signal d'émission acoustique (5) inséré dans la tige de pressage (2) et un circuit de détection relié au capteur pour détecter lesdites fissures (11a, 11b) sur la base d'un signal de détection produit par ledit capteur (5) lorsque ladite pièce mécanique est soumise à ladite pression.

2. Une machine selon la revendication 1, dans laquelle ledit circuit de détection comporte des premiers moyens de comparaison (37) pour comparer ledit signal de détection avec un premier niveau prédéterminé ($i_1$) pour déterminer si ledit appareil fonctionne normalement et des seconds moyens de comparaison (28) pour comparer ledit signal de détection avec un second niveau prédéterminé ($i_2$) supérieur audit premier niveau prédéterminé pour déterminer si les fissures (11a, 11b) se produisent dans ladite pièce mécanique (1).

3. Une machine selon la revendication 2, dans laquelle ledit circuit de détection comporte:

— un interrupteur de fin de course (9) relié à ladite tige de pressage (2) de façon à être ouvert et fermé;

— un circuit d'amplification (25, 26) pour amplifier le signal de détection produit par ledit capteur (5) lorsque ladite pièce mécanique (1) est soumise à la pression exercée par ladite tige de pressage (2);

— le premier moyen de comparaison comportant un premier circuit de limitation (27) qui comporte une sortie alimentée avec le signal amplifié à la sortie dudit circuit d'amplification (25, 26) et comporte le premier niveau prédéterminé ($i_1$);

— le second moyen de comparaison comportant un second circuit de limitation (28) qui comporte une sortie alimentée par le signal amplifié à la sortie dudit circuit d'amplification (25, 26) et qui présente le second niveau prédéterminé ($i_2$);

— un premier circuit de comptage (15, 17) apte à être remis à zéro par un signal de fermeture de circuit dudit interrupteur de fin de course (9) et par des impulsions de comptage fournies par ledit premier circuit de limitation (27);

— un second circuit de comptage (16, 18) apte à être remis à zéro par le signal de fermeture de circuit dudit interrupteur de fin de course (9) et par des impulsions de comptage fournies par ledit second circuit de limitation (28);

— un premier circuit de bascule (21) pour maintenir un signal de comptage fourni par ledit premier circuit de comptage (17) au cours de la période pendant laquelle ledit interrupteur de fin de course est fermé;

— un second circuit de bascule (22) pour maintenir un signal de comptage fourni par ledit second circuit de comptage (18) au cours de la période pendant laquelle ledit interrupteur de fin de course (9) est fermé;

— un premier circuit d'affichage (23) pour afficher le signal maintenu par ledit premier circuit de bascule (21); et

— un second circuit d'affichage (24) pour afficher le signal maintenu par ledit second circuit de bascule (22).

4. Une machine selon la revendication 1, dans laquelle ledit capteur (5) inséré dans ladite tige de pressage (2) est engagé dans un trou formé dans ladite tige de pressage avec un joint torique (35) pour empêcher la poussière d'entrer et ledit capteur (5) est maintenu en position sous une pression constante par un ressort (36) d'un support de capteur (37).

5. Un procédé de détection de fissures utilisant des moyens de détection de fissures, lesdites fissures étant éventuellement produites dans une pièce mécanique au cours de son traitement de redressement de déformations, et comportant les étapes consistant en:

— la détection d'un premier signal d'émission acoustique produit dans une première période prédéterminée (I) par suite des fissures (11a, 11b) éventuellement produites dans la pièce mécanique (1) au cours du traitement de redressement de la déformation et de la détection d'un second signal d'émission acoustique produit dans une seconde période prédéterminée (II) et dû à des causes autres que lesdites fissures (11a, 11b);

— la détermination de l'existence ou de la non existence desdites fissures en comparant ledit premier signal d'émission avec un première valeur prédéterminée, ledit premier signal d'émission étant contenu dans un signal de sortie produit par un capteur (5) de détection de signal d'émission acoustique inséré dans une tige de pressage (2) d'une machine de redressement de déformations; et

— le diagnostic pour savoir si les moyens de détection de fissures fonctionnent correctement ou non en comparant ledit second signal d'émission avec une seconde valeur prédéterminée.

FIG. IA

FIG. IB
(a)

(b)

FIG. 4B

FIG. 2

FIG. 3

(A)

(B)

(C)

(D)

(E)

(C')

(D')

(E')

FIG. 4A